# NEW EUROPEAN PATENT SPECIFICATION

(11) **EP 0 778 798 B2**
(45) Date of publication and mention of the opposition decision: **24.10.2007**
(45) Mention of the grant of the patent: 05.12.2001
(21) Application number: 95933728.8
(22) Date of filing: 01.09.1995
(51) Int. Cl.: B41M 5/035, B41M 5/385, B44C 1/17

(54) **PERMANENT HEAT ACTIVATED TRANSFER PRINTING PROCESS AND COMPOSITION**
ZUSAMMENSETZUNG UND VERFAHREN ZUM KONTINUIERLICHEN, WÄRMEAKTIVIERBAREN ÜBERTRAGUNGSDRUCKEN
COMPOSITION ET PROCEDE D'IMPRESSION PERMANENTE PAR REPORT THERMOSENSIBLE

(30) Priority: 01.09.1994 US 299736; 26.01.1995 WO PCT/US95/01056; 25.07.1995 US 506894
(43) Date of publication of application: 18.06.1997
(60) Divisional application: 01201617.6
(73) Proprietor: Sawgrass Technologies, Inc., Mt. Pleasant SC 29464 (US)
(72) Inventor: HALE, Nathan, S., Mt. Pleasant, SC 29464 (US); XU, Ming, Mt. Pleasant, SC 29464 (US)
(74) Representative: Brown, Fraser Gregory James
(86) International application number: PCT/US1995/011156
(87) International publication number: WO 1996/006729

(56) References cited:
- EP-A- 0 506 395
- WO-A-92/00852
- WO-A-95/21739
- GB-A- 1 527 396
- GB-A- 2 189 436
- JP-A- 5 255 626
- JP-A- 57 102 390
- US-A- 4 713 081
- US-A- 5 164 232
- US-A- 5 276 467
- US-A- 5 487 614

## Description

### FIELD OF THE INVENTION

This invention relates to printing generally, and is more specifically directed to a method of printing heat activatible ink by means of an ink jet printer onto paper or other printable substrate as a medium, and subsequently heat activating the ink, thereby transferring the design formed by the ink from the medium to a substrate on which the design is to permanently appear.

### BACKGROUND OF THE INVENTION

Words and designs are frequently printed onto clothing and other textile materials, and other objects. Common means of applying such designs to objects include the use of silk screens, and mechanically bonded thermal transfers.

The use of computer technology allows substantially instantaneous printing of images. For example, video cameras or scanning may be used to capture an image to a computer. The image may then be printed by any suitable printing means, including mechanical thermal printers, ink jet printers and laser printers. These printers will print in multiple colors.

Color ink jet printers are in common use. Color ink jet printers use combinations of cyan, yellow and magenta inks or dyes to produce multi-color images.

The primary types of ink jet printers currently in use fall into three categories: phase change, free flow, and bubble jet. The inks or dyes used in phase change ink jet printing are contained in a solid compound which changes state by the application of heat to liquify the solid, whereupon the ink composition is printed. Free flow and bubble jet printers use liquid inks. although the actual printing process of free flow ink jet printers differs from bubble jet printers.

Heat activatible transfer ink dye solids change to a gas at about 210°C (400°F), and have a high affinity for polyester at the activation temperature and a limited affinity for most other materials. Once the gassification bonding takes place, the ink is permanently printed and highly resistant to change or fading caused by laundry products.

Hale, U.S. Patent Numbers 5,246,518, 5,248,363 and 5,302,223 disclose the use of thermal printers to produce an image on a medium or transfer sheet wherein the image is comprised of sublimiation or other heat activatible inks. The method described in Hale does not activate the ink during the printing of the medium or transfer sheet.

The process of printing heat sensitive ink dye solids such as sublimation inks by means of a phase change ink jet printer is similar to the process described in Hale, U.S. Patent Numbers 5,246,518, 5,248,363 and 5,302,223. The use of heat by all ink jet printers presents the problem recognized in the Hale patents of printing heat activatible inks in a non activated form by means of such printers, since the ink is exposed to high temperatures by the printer. Bubble jet printers, for example, heat the ink during the printing process to around the boiling point of the ink solvent, which is typically water. Free flow ink jet printers use heat to form pressure which transports the ink during the printing process.

The use of liquid inks, as required by free flow and bubble jet priners, presents a new set of problems when trying to print dye solids. The orifice or nozzles of free flow and bubble jet printers are not designed for the dispensing of solids contained within a liquid material. The orifice of these printers are typically 5-10 µm (microns) in diameter, and clogging of the orifice will occur when dye solids of large particle size or in high volume are transferred through the orifice.

Further, when the dye solids are placed into the liquid, the dye solids tend to separate from the liquid over time and fall to the bottom of the ink container. The ink composition is typically sealed in a container at a manufacturing facility, for subsequent mounting of the container within the ink jet printer, meaning that a substantial storage time for the ink composition exists prior to use. Separation of the liquid and solids within the ink formulation presents problems with regard to the mechanical operation of the printer and the print quality achieved from use of the ink formulation. Materials which inhibit separation must also inhibit agglomeration of the solid dye particles, while allowing, and not preventing due to insulation or otherwise, activation of the ink or dye during the final printing at elevated temperatures.

GB-A-2,189,436 discloses a method of transfer printing by use of a computer.

US-A-4,713,081 discloses an aqueous dyestuff preparation using lignin sulphonates, but essentially as a paste.

WO-A-95/21739 discloses a version of the process of Hale described in the Hale patents referred to above.

According to one aspect of this invention there is provide a method of printing an image using inks which are heat activatible so as to be fixable by heat and which are printed by a colour printer as claimed in claim 1. According to another aspect of this invention there is provided a method of printing a multiple colour image using inks which are heat activatible so as to be heat fixable, as is claimed in claim 2. Preferred features are claimed in the sub-claims 3 to 9.

### SUMMARY OF THE PRESENT INVENTION

The ink dye solids are transferred in the desired design by means of an ink jet printer onto a substrate, which acts as a medium. The substrate may be paper, or it may be other material which will facilitate and withstand the transfer temperature, and which facilitates bonding of the ink layer to the substrate.

The ink jet printer may incorporate a thermal process, but the dye solids of the invention do not activate at the operational temperatures of the printer. Heat activation of the dye solids does not take place at the time of printing of the image by the printer, but rather, takes place at the time of the transfer of the image from the medium to the substrate on which the image is permanently applied. The non activated dye solids produce a printed image on the medium which is recongnizable, but the colors are dull and are not acceptable for most applications.

Sufficient temperature is then applied to the image to transfer the image from the medium to the substrate on which the image is to permanently appear. The heat activates, or sublimates, the dye solids during the transfer from the medium to the substrate. The image is then permanently bonded to the substrate. The permanent image is sharp, with vivid colors forming the image.

The ink formulation prepared in carrying out the invention is a liquid, and finely divided dye solids are present in a liquid carrier, in a colloidal form. An emulsifying enforcing agent, which has characteristics of a surfactant, surrounds and shields the dye particles to prevent undesired activation at low heat and to prevent agglomeration of the dye particles. However, the emulsifying enforcing agent allows activation of the dye at higher temperatures.

### DESCRIPTION OF THE DRAWINGS

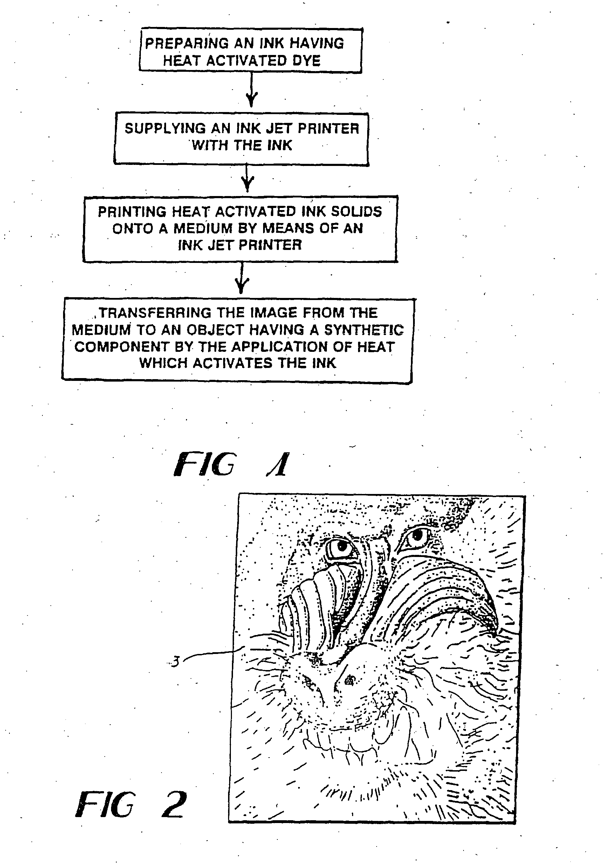

**Figure 1** is a block diagram showing the printing process.
**Figure 2** illustrates an example of a design printed by a printer using the printing process.

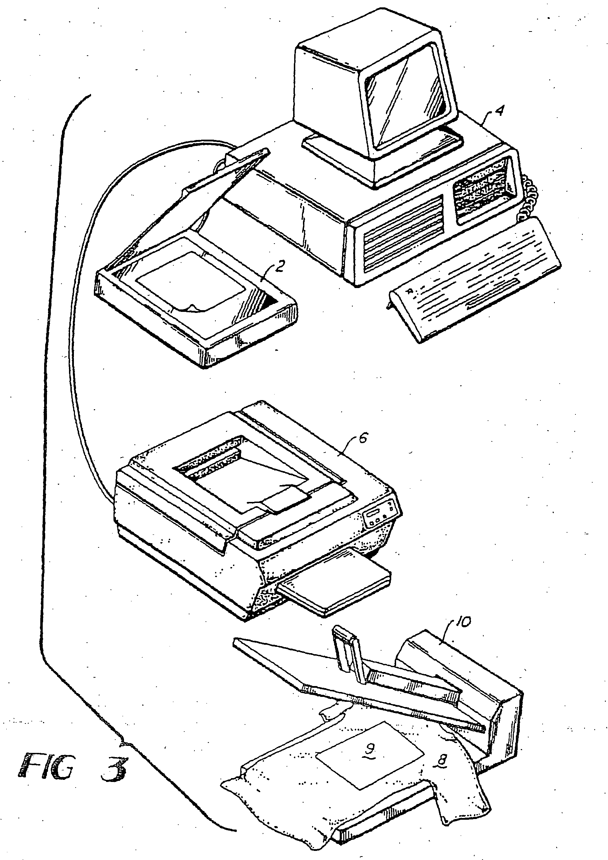

**Figure 3** is a diagrammatic illustration showing exemplary elements of computer and printing systems which could be used to achieve the printing process.

### DETAILED DESCRIPTION OF THE PREFERRED EMBODIMENT

In the preferred embodiment, a video camera or scanning device **2** is used to capture an image **3**. The image is then input into a computer **4**. The computer directs a printer **6** to print the image. Any means of forming
an image which may be printed from a computer may be used, including images generated by software. Available computer design graphic software may be used, or still photography may be used. The design may be photographic, graphic artistic, or simply letters or words. The use of cyan, yellow and magenta ink compositions allow the printer to print in full color or multi-color designs.

In the present invention, heat activatible ink dye solids are used, and are transferred to a medium by the printer without activating the dye solids. The heat activatible dye solids are transferred onto the medium by the printer.

Virtually any material may be used as a medium which can be printed upon by a printer, and which will withstand the heat activation transfer temperature of approximately 210°C (400°F), as described herein. This medium may be any paper commonly used with color ink jet printers, however, standard bond paper may be used, or even a sheet of metal, if the metal can be handled by the printer.

Once the image is printed onto the medium, the image may be permanently transferred onto the substrate presently, or at a later time. Most commonly, the design will be transferred onto a textile substrate, such as a shirt **8**, although the image may be transferred onto other materials which act as a substrate, such as metal, ceramic, wood, or plastic. The design **3**, which is printed onto the medium **9** without activating the ink, is placed against the object **8**. A temperature which is sufficient to activate the dye solids is then applied. This temperature will typically be around 210°C (400°F.) This temperature is applied for a time sufficient to heat activate and transfer the dye solids. A heat transfer machine **10** may be used to accomplish the transfer of the inks from the medium to the substrate. Activation, or sublimation, does not take place at the time of printing the image onto the medium, even though heat may be used to accomplish the printing of the image onto the medium, but occurs during the transfer from the medium to the substrate.

Free flow ink jet printers and bubble jet ink jet printers use inks which are in a liquid form. Free flow ink jet printers dispense ink through an orifice in an ink container. The printer commands and controls the flow of ink through the orifice to print in the desired manner.

Bubble jet printers also use inks which are in a liquid form, and which are held in a container. Bubble jet printers use a different orifice or nozzle system than free flow printers. A channel and heating system is used to form a bubble. The formation of the bubble is controlled by the printer by the application of heat to the ink to print as desired.

The heat activatible inks or dyes are solid particles. Free flow and bubble jet printers are designed to be used with liquid inks, but not with inks having solid particulate within the liquid. The presence of solid material clogs the orifice or nozzle of the printer. Further, liquid ink compositions into which a solid particulate is placed or dissolved are not homogenous over time. The solid dye particles in the mixture settle from the liquid toward the bottom of the ink container. This settling increases the clogging of the orifice. Further, print quality is affected if the ink is not consistent.

The liquid ink composition of the present invention is an emulsion comprised of finely divided heat activatible dye solids which are placed in an emulsion by means of an emulsifying enforcing agent which is present in a solvent. Humectants, corrosion inhibitors, surfactants, and anti-foaming agents may also be included in the composition.

The formulation of an emulsion comprising heat activatible dye solids which is used with ink jet printers requiring inks is as follows :

| **Material** | **Weight%** |
|---|---|
| Heat Activatible Dye/Ink Solid | 5―30 |
| Emulsifying Enforcing Agent | 1―20 |
| Binder | 0―30 |
| Humectants | 0―40 |
| Foam Control Agent | 0―10 |
| Fungicide | 0―2 |
| Viscosity Control Agent | 0―10 |
| Surface Tension Control Agent | 0―10 |
| Diffusion Control Agent | 0―10 |
| Flow Control Agent | 0―15 |
| Evaporation Control Agent | 0―20 |
| Corrosion Control Agent | 0―10 |
| Cosolvent | 0―30 |
| Solvent | 30―90 |
| **TOTAL** | **100%** |

The heat activatible dye or ink solid is finely divided and placed into an emulsion by means of the emulsifying agent and the solvent, which may be water. The remaining agents may be added to facilitate formulation, storage and/or printing of the liquid ink composition.

| FORMULATION EXAMPLE #2- Yellow Ink-Jet Formula: | |
|---|---|
| Material | Weight % |
| Bafixan® Yellow 3FE⁸ | 2.0 |
| Dipropylene Glycol | 4.5 |
| DMSO | 1.5 |
| Cobratec®⁹ | 0.45 |
| NaOH (10N) | 3.0 |
| Distilled H₂O | 88.55 |
| Total: | 100 |

| | |
|---|---|
| ⁸ BASF Corporation ⁹ PMC Speciaities Group | |

Formulation Example 2, which is not for use in the method of the present invention, comprises a heat activated yellow ink solid or dye. Dipropylene glycol and DMSO are co-solvents. Distilled water acts as a solvent. Cobratec® acts as a corrosion inhibitor.

In this formulation, a particular ink solid is finely divided to yield a small particle size. The particular ink solid of Example 2 will tend to substantially dissolve within sodium hydroxide. The combination of the sodium hydroxide and the solvent, which is the formulation example is distilled water, yield an emulsion which may be used in bubble jet and free flow ink jet printers.

Generically, a "humectant" is a moisturizing agent. In the relevant art, the term "humectant" is used to describe agents which are included in ink formulations to regulate the rate at which the ink dries and to control the viscosity of the ink. In addition to these properties, the present invention may comprise one or more humectants which will prevent clogging. of the orifice or nozzle. With certain inks, the humectants will regulate the sublimation rate of the inks or dyes as they are transferred from the medium to the object on which the printed design is to permanently appear. The humectant in formulation example 2 is dipropylene glycol, which acts as a co-solvent and humectant.

| FORMULATION EXAMPLE #3; Cyan Ink-Jet Formula: | |
|---|---|
| Material | Weight% |
| Sublaprint® Blue 70013¹⁰ | 1.0 |
| Lignosol® FTA¹¹ | 3.5 |
| ME® 39235¹² | 10.0 |
| Diethylene Glycol | 9.5 |
| DMSO | 1.0 |
| Distilled H₂O | 75.0 |
| Total: | 100.00 |

| | |
|---|---|
| ¹⁰ Keystone Aniline Corporation ¹¹ Lignotech (U.S.) Inc. ¹² Michelman, Inc. | |

Sublaprint® Blue 70013 is a heat activatible ink or dye solid. Lignosol® FTA and ME® 39235 are emulsifying enforcing agents. Lignosol® FTA also acts as a fungicide. ME® 39235 is a polymer, and more specifically, it is a polyethylene binder. Diethylene Glycol and DMSO act as humectants. The solvent is distilled water.

Sublaprint® Blue 70013 is more difficult to sublimate than Bifaxan® Yellow 3GE, and is less soluble in the emulsifying enforcing agent. Diethylene glycol is used as a humectant to facilitate sublimation of the Sublaprint® Blue ink solid.

The heat activatible ink solid is finely divided to a small particle size. The finely divided ink solid is combined with one or more emulsifying enforcing agents, which are in turn combined with the solvent

| Formulation Example #4: Magenta Ink-Jet Ink Formula: | |
|---|---|
| Material | Weight % |
| Intratherm® Brill Red P-31NT¹³ | .5 |
| Lignosol® FTA¹⁴ | 3.0 |
| ME® 39235¹⁵ | 11.0 |
| NA-SUL®¹⁶ | 1.0 |
| DeeFo® 806-102¹⁷ | 0.2 |
| Sorbitol | 0.5 |
| Dipropylene Glycol | 3.5 |
| Distilled H₂O | 79.3 |
| Total: | 100 |

| | |
|---|---|
| ¹³ Crompton & Knowles Corporation ¹⁴ Ugnotech (U.S.) Inc. ¹⁵ Michelman, Inc. ¹⁶ King Industries ¹⁷ Ultra Additives | |

Formulation Example #4 comprises a heat activatible ink solid or dye which is finely divided and combined in an emulsifying enforcing agent. The emulsifying enforcing agent or medium is, as with Example #3, Lignosol® FTA and ME® 39235. Distilled water is used as a solvent. Dipropylene Glycol is used as a humectant.

Formulation Example #4 further comprises an anti-foaming or foaming control agent, DeeFo® 806-102 to retard foaming of the liquid ink composition. Formulation Example #4 further comprises a surfactant, which may be Sorbitol® , and a corrosion inhibitor, which, in this example, is NA-SUL® .

Formulation Examples 3 and 4 may be described as colloids, having finely divided ink particles of not larger than 0.1 microns in diameter present within the disperse medium.

The invention provides a colloid which will work within free flow ink jet printers, piezo electric printers, and bubble jet printers, without experiencing problems relating to orifice clogging which results from the use of an ink solid. Further, the use of a colloid prevents the separation of the ink dye solids from the liquid components, rendering an ink composition which is stable over time. Typically, the liquid ink formulations are present within the printers in containers. Three or more colors of liquid ink are present. The containers may be factory sealed, and as such, the ink formulation may be held within the container for a long period of time.

The bubble jet printer forms the bubble which is used to print the ink at approximately the boiling point of the ink solvent. In most formulations, water will be used as the solvent, so that the ink is exposed to temperatures of 100 degrees C or higher as the ink is printed. Comparable temperatures may be used in free flow ink jet printers to create pressure for the purpose of transporting the ink for printing. As with the phase change ink jet printer, the ink is exposed to temperatures which will activate or sublimate some heat activatible inks or dyes. The inks or dyes used in the ink compositions herein will not activate or sublimate at the operational temperatures of the primer.

The liquid ink formulation comprises a liquid carrier. The liquid carrier, or solvent, may be water. An emulsifying enforcing agent, which is soluble in the liquid carrier, forms a colloid in the liquid carrier. The emulsifying enforcing agent has an affinity for the heat activatible dye, and attaches to, or may surround, all or part of individual particles of the dye particles.

The heat activatible dye as used is a finely divided solid which is substantially insoluble in the liquid carrier. The dye particles, when placed in a liquid, will tend to agglomerate, vastly reducing, and practically eliminating, the efficacy of the ink formulation. The emulsifying enforcing agent is used to form a colloid, and in the present invention, also surrounds and shields, and thereby separates, the individual dye particles from the liquid carrier and from each other, preventing agglomeration of the dye particles, and thereby preventing the ink formulation from clogging the orifices of the printer, such as the ink jets. The emulsifying enforcing agent shields and insulates the dye particles, preventing activation or sublimation of the dye due to exposure to heat present in the printer and the printer processes. The emulsifying enforcing agent shields the dye particles, and improves the shelf life of the ink formulation. The adverse effects of heat, chemical reactions, light, time, and other factors present in packaging or the environment are reduced by the emulsifying enforcing agent. However, while the emulsifying enforcing agent shields the dye particles, the insulation properties of the emulsifying enforcing agent are such that heat activation of the heat activated dye is achieved during final transfer of the image from the medium, which is performed at, or above, the temperature at which the dye activates, and the required optical density of the dye after final transfer by heat activation is attained.

An example of an emulsifying enforcing agent which will achieve the objects of the invention, when used with water as a liquid carrier, is a metallic sulfonate salt known as lignin sulfonate, or lignosulfonate, or sulfite lignin. These products generally carry CHSO₃ function groups, and are soluble in aqueous solutions of wide pH ranges. Lignin sulfonates are sold under various brand names, including Lignosol and Raykrome. Lignin sulfate may also be used.

Another group of usable lignin products as the emulsifying enforcing agents may be chosen from a group known as oxylignins. These agents are derived from lignins that have been oxidized and have reduced sulfonic and methoxyl groups, and increased numbers of functional phenolic, hydroxyl and carboxylic groups.

All of the lignin products disclosed can be further modified through processes or reverse processes of sulfonation, methylation, carboxylation, fractionation, etc. in order to change their chemical and physical properties such as water solubilities, pH ranges, molecular weights, heat stability and emulsification ability.

The lignins used as dye dispersant/emulsifying enforcing agents in the invention generate stable sublimation (heat sensitive) dye colloid systems, with proper adjustment of solvent and usage level. Lignosulfonate products such as Marasperse CBA-1 (Lignotech), Marasperse 52CP (Lignotech), Lignosol FTA (Lignotech), Ugnosol SFX-65 (Ugnotech), Temsperse S002 (Temfibre, Inc.), Stepsperse DF series (Stephan Co.), Weschem NA-4 (Wesco Technologies, LTD); kraft lignin products such as Diwatex XP (Lignotech), Reax 85 (Westvaco); and oxylignin products such as Marasperse CBOS-6 and Vanisperse CB, etc. are suitable for such emulsfying of the sublimation (heat sensitive) dye systems in aqueous systems. The resulting double-layer structure (dye particle in the center and surrounded with lignin molecules and another hydrated layer on the outer layer) shields the dye and retards reaggolmeration, and retards the effects of chemical and physical changes.

Other surfactants/dye dispersants may be used as either primary dispersants/emulsifying enforcing agents or as additives to improve the colloid stability of the resulting ink, and therefore enhance the printing quality and eliminate clogging and kogation at the print head. The concentration of these agents may range from 1% to 15% of the total composition without damaging the sublimation heat transfer quality of the heat-sensitive dye at the heat transfer stage. Such materials can be added into the composition after finely dividing the solid dye particles or after the sublimation (heat-sensitive) dye particles have been well dispersed into the aqueous solution through a milling/dispersing process and separation process, such centrifuging or filtration. These additives function as colloid stabilizers, leveling agents, wetting agents, or forming control agents, in addition to their function as emulsifying enforcing agents.

The agents which may be used for this purpose include alkylaryl polyether alcohol types of nonionic surfactants such as Triton X series (Octylphenoxypolyethoxyethanol); alkylamine ethoxylates nonionic surfactant such as Triton RW series Triton CF-10; Tergitol nonionic surfactant series from Union Carbide Chemicals; polysorbate products, such as Tween series from ICI Chemicals and Polymers; polyakylene and polyalkylene modified surfactants such as Silwet surfactants (polydimethylsiloxane copolymers); CoatOSil surfactants from OSI Specialties; alcohol alkoxylate types of nonionic surfactants, such as Renex series, BRIJ series, Ukanil series; Sorbitan ester products such as Span series, Arlacel series; alkoxylated esters/PEG products such as Tween series, Atlas series, Myrj series and Cirrasol surfactants from ICI Chemicals and Polymers, Alkyl phosphoric acid esters surfactant products such as Amyl Acid Phosphate, Chemophos TR-421; alkyl amine oxides such as Chemoxide series from Chemron Corporation; anionic sarcosinate surfactants such as Hamposyl series from Hampshire Chemical corporation; glycerol esters or polyglycol ester nonionic surfactants such as Hodag series from Calgene Chemical.

## Claims

1. A method of printing an image using inks which are heat activatible so as to be fixable by heat, comprising the steps of:
a. providing an ink jet printer
b. providing at least one said heat fixable ink; and
c. transferring the heat fixable ink in the form of an image to an object on which the image is to appear, the transferring step including printing the heat fixable ink onto a substrate medium by means of the printer to print the heat fixable ink in the image on the substrate medium without fixing the heat fixable ink and subsequently transferring the image from the substrate medium to the object by the application of heat to fix the ink on the object;
**characterised in that** said heat fixable ink is a liquid ink formulation comprising:
(i) finely divided heat fixable dye solids present in a liquid carrier as a colloidal dispersion, said dye solids being substantially insoluble in the liquid carrier, and
(ii) at least one emulsifying enforcing agent having an affinity for the heat fixable dye solids and attached to or surrounding all or part of individual particles of the dye solids,
whereby said emulsifying enforcing agent prevents agglomeration of the colloidal dye solids so as to prevent separation of the dye solids from the liquid carrier, rendering an ink composition which is stable over time.

2. A method of printing a multiple colour image using heat fixable inks which are printed by a printer according to claim 1, wherein the printer is a colour ink jet printer, the at least one heat fixable ink provided is heat fixable inks in at least three colours and the transferring step includes transferring the heat fixable inks in the form of the multiple colour image onto the substrate by means of the colour ink jet printer to print the heat fixable inks in the multiple colour image on the substrate without fixing the heat fixable inks.

3. A method of printing an image using heat fixable inks which are printed by a printer according to claim 1 or claim 2, wherein the substrate onto which the heat fixable ink or inks are printed by the printer is used as a medium onto which the ink or inks are printed without fixing for subsequent transfer of the image from the medium to the object and fixing on the object by the application of heat.

4. A method of printing an image using heat fixable inks which are printed by a printer, according to claim 1, claim 2 or claim 3, wherein said emulsifying enforcing agent comprises a lignin.

5. A method of printing an image using heat fixable inks which are printed by a printer, according to claim 4, wherein said emulsifying enforcing agent is a sulphonated lignin.

6. A method of printing an image using heat fixable inks which are printed by a printer, according to any one of the claims 1 to 5, wherein said heat fixable inks further comprise a surfactant.

7. A method of printing an image using heat fixable inks which are printed by a printer, according to any one of claims 1 to 6, wherein the printer is a thermal ink jet printer or a piezo electric printer.

8. A method of printing an image using heat fixable inks which are printed by a printer, according to any one of claims 1 to 7, wherein said heat fixable ink is fixed upon the application of heat at or greater than a fixing temperature of said ink for a period of time sufficient to fix said ink and wherein said emulsifying enforcing agent does not substantially increase the activation temperature required to fix said heat fixable ink after said heat fixable ink is printed onto said substrate.

9. A method of printing an image using heat fixable inks which are printed by a printer, according to any preceding claim wherein said heat fixable ink is fixed at a required activation temperature of about 210°C (400°F).

## Patentansprüche

1. Verfahren zum Drucken eines Bildes unter Verwendung von Druckfarben, die wärmeaktivierbar sind, so daß sie durch Wärme fixiert werden können, umfassend die Schritte:
a. Bereitstellen eines Tintenstrahldruckers,
b. Bereitstellen mindestens einer wärmefixierbaren Druckfarbe, und
c. Übertragen der wärmefixierbaren Druckfarbe in Form eines Bildes auf einen Gegenstand, auf dem das Bild erscheinen soll, wobei der Übertragungsschritt das Drucken der wärmefixierbaren Druckfarbe auf ein Substratmedium mit Hilfe des Druckers einschließt, um die wärmefixierbare Druckfarbe in dem Bild auf das Substratmedium zu drucken, ohne dabei die wärmefixierbare Druckfarbe zu fixieren, sowie anschließend das Übertragen des Bildes vom Substratmedium auf den Gegenstand durch Anwendung von Wärme, Druckfarbe auf dem Gegenstand zu fixieren,
**dadurch gekennzeichnet, daß** die wärmefixierbare Druckfarbe eine flüssige Druckfarbenformulierung ist, enthaltend (i) feinverteilte wärmefixierbare Farbstoff-Festkörper in einem flüssigen Träger als kolloidale Dispersion, wobei die Farbstoff-Festkörper im flüssigen Träger im wesentlichen unlöslich sind, und mindestens ein Emulgierungsmittel, das eine Affinität zu den wärmefixierbaren Farbstoff-Festkörpern hat und an allen oder an einem Teil einzelner Partikel der Farbstoff-Festkörper angelagert ist oder diese umschließt, wobei das Emulgierungsmittel die Agglomeration der Farbstoff-Festkörper verhindert, um eine Separation der Farbstoff-Festkörper aus dem flüssigen Träger zu verhindern, was eine Druckfarben-Zusammensetzung ergibt, die über einen längeren zeitraum stabil ist.

2. Verfahren zum Drucken eines Mehrfarbenbildes unter Verwendung von wärmefixierbaren Druckfarben, die von einem Drucker gedruckt werden, nach Anspruch 1, wobei der Drucker ein Farbtintenstrahldrucker ist, die mindestens eine vorgesehene wärmefixierbare Druckfarbe wärmefixierbare Druckfarben in mindestens drei Farben sind und der Übertragungsschritt das Übertragen der wärmefixierbaren Druckfarben in Form des Mehrfarbenbildes auf das Substrat mit Hilfe des Farbtintenstrahldruckers einschließt, um die wärmefixierbaren Druckfarben in dem Mehrfarbenbild auf das Substrat zu drucken, ohne dabei die wärmefixierbaren Druckfarben zu fixieren.

3. Verfahren zum Drucken eines Bildes unter Verwendung von wärmefixierbaren Druckfarben, die mit Hilfe eines Druckers gedruckt werden, nach Anspruch 1 oder Anspruch 2, wobei das Substrat, auf das die wärmefixierbare Druckfarbe bzw. die Druckfarben von dem Drucker gedruckt werden, als ein Medium verwendet wird, auf das die Druckfarbe bzw. die Druckfarben ohne Fixierung gedruckt werden, um anschließend das Bild von dem Medium auf den Gegenstand zu übertragen und durch Anwendung von Wärme auf dem Gegenstand zu fixieren.

4. Verfahren zum Drucken eines Bildes unter Verwendung von wärmefixierbaren Druckfarben, die von einem Drucker gedruckt werden, nach Anspruch 1, Anspruch 2 oder Anspruch 3, wobei das Emulgierungsmittel ein Lignin enthält.

5. Verfahren zum Drucken eines Bildes unter Verwendung von wärmefixierbaren Druckfarben, die von einem Drucker gedruckt werden, nach Anspruch 4, wobei das Emulgierungsmittel ein sulfoniertes Lignin ist.

6. Verfahren zum Drucken eines Bildes unter Verwendung von wärmefixierbaren Druckfarben, die von einem Drucker gedruckt werden, nach einem der Ansprüche 1 bis 5, wobei die wärmefixierbaren Druckfarben ferner einen grenzflächenaktiven Stoff enthalten.

7. Verfahren zum Drucken eines Bildes unter Verwendung von wärmefixierbaren Druckfarben, die von einem Drucker gedruckt werden, nach einem der Ansprüche 1 bis 6, wobei der Drucker ein Thermotintenstrahldrucker oder ein piezoelektrischer Drucker ist.

8. Verfahren zum Drucken eines Bildes unter Verwendung von wärmefixierbaren Druckfarben, die von einem Drucker gedruckt werden, nach einem der Ansprüche 1 bis 7, wobei die genannte wärmefixierbare Druckfarbe fixiert wird, wenn Wärme bei oder über einer Fixiertemperatur der genannten Druckfarbe für einen Zeitraum angewendet wird, der ausreicht, um die genannte Druckfarbe zu fixieren, und wobei das Emulgierungsmittel die Aktivierungstemperatur, die erforderlich ist, um die genannte wärmefixierbare Druckfarbe zu fixieren, nachdem die genannte wärmefixierbare Druckfarbe auf das Substrat gedruckt ist, nicht wesentlich erhöht.

9. Verfahren zum Drucken eines Bildes unter Verwendung von wärmefixierbaren Druckfarben, die von einem Drucker gedruckt werden, nach einem der vorhergehenden Ansprüche, wobei die genannte wärmefixierbare Druckfarbe bei einer erforderlichen Aktivierungstemperatur von ungefähr 210°C (400°F) fixiert wird.

## Revendications

1. Procédé d'impression d'une image utilisant des encres qui sont activables par la chaleur de façon à pouvoir être fixées à chaud, comprenant les étapes suivantes :
a. fourniture d'une imprimante à jet d'encre
b. fourniture d'au moins une dite encre pouvant être fixée à chaud ; et
c. transfert de l'encre pouvant être fixée à chaud sous la forme d'une image sur un objet sur lequel l'image doit apparaître, l'étape de transfert comportant l'impression de l'encre pouvant être fixée à chaud sur un support de substrat au moyen de l'imprimante afin d'imprimer l'encre pouvant être fixée à chaud dans l'image sur le support de substrat sans fixer l'encre pouvant être fixée à chaud et ensuite le transfert de l'image du support de substrat à l'objet par application de chaleur pour fixer l'encre sur l'objet ;
**caractérisé en ce que** ladite encre pouvant être fixée à chaud est une formulation d'encre liquide comportant :
(i) des solides pigmentaires finement découpés pouvant être fixés à chaud, présents dans un vecteur liquide sous forme de dispersion colloïdale, lesdits solides pigmentaires étant sensiblement insolubles dans le vecteur liquide, et
(ii) au moins un agent émulsifiant présentant une affinité avec les solides de coloration pouvant être fixés à chaud et lié à ou entourant tout ou partie des éléments particulaires des solides pigmentaires,
ledit agent émulsifiant empêchant ainsi l'agglomération des solides pigmentaires colloïdaux de façon à empêcher la séparation des solides pigmentaires du vecteur liquide, donnant une composition d'encre stable dans le temps.

2. Procédé d'impression d'une image à couleurs multiples utilisant des encres pouvant être fixées à chaud qui sont imprimées par une imprimante selon la revendication 1, dans lequel l'imprimante est une imprimante à jet d'encre couleur, ladite ou lesdites encres pouvant être fixées à chaud fournie sont constituées d'encres pouvant être fixées à chaud en au moins trois couleurs et l'étape de transfert comporte le transfert des encres pouvant être fixées à chaud sous la forme de l'image à couleurs multiples sur le substrat au moyen de l'imprimante à jet d'encre couleur pour imprimer les encres pouvant être fixées à chaud dans l'image à couleurs multiples sur le substrat sans fixer les encres pouvant être fixées à chaud.

3. Procédé d'impression d'une image utilisant des encres pouvant être fixées à chaud qui sont imprimées par une imprimante selon la revendication 1 ou la revendication 2, dans lequel le substrat sur lequel l'encre ou les encres pouvant être fixée(s) à chaud est (sont) imprimée(s) par l'imprimante est utilisé comme support sur lequel l'encre ou les encres est (sont) imprimée(s) sans fixation pour le transfert subséquent de l'image du support sur l'objet et fixation sur l'objet par application de chaleur.

4. Procédé d'impression d'une image utilisant des encres pouvant être fixées à chaud qui sont imprimées par une imprimante, selon la revendication 1, la revendication 2 ou la revendication 3, dans lequel ledit agent émulsifiant comprend de la lignine.

5. Procédé d'impression d'une image utilisant des encres pouvant être fixées à chaud qui sont imprimées par une imprimante, selon la revendication 4, dans lequel ledit agent émulsifiant est de la lignine sulfonée.

6. Procédé d'impression d'une image utilisant des encres pouvant être fixées à chaud qui sont imprimées par une imprimante, selon l'une quelconque des revendications 1 à 5, dans lequel lesdites encres pouvant être fixées à chaud comprennent en outre un agent de surface.

7. Procédé d'impression d'une image utilisant des encres pouvant être fixées à chaud qui sont imprimées par une imprimante, selon l'une quelconque des revendications 1 à 6, dans lequel l'imprimante est une imprimante thermique à jet d'encre ou une imprimante piézo-électrique.

8. Procédé d'impression d'une image utilisant des encres pouvant être fixées à chaud qui sont imprimées par une imprimante, selon l'une quelconque des revendications 1 à 7, dans lequel ladite encre pouvant être fixée à chaud est fixée par application de chaleur à une température égale ou supérieure à une température de fixation de ladite encre pendant un laps de temps suffisant pour fixer ladite encre et dans lequel ledit agent émulsifiant n'augmente pas sensiblement la température d'activation requise pour fixer ladite encre pouvant être fixée à chaud après que ladite encre pouvant être fixée à chaud est imprimée sur ledit substrat.

9. Procédé d'impression d'une image utilisant des encres pouvant être fixées à chaud qui sont imprimées par une imprimante, selon l'une quelconque des revendications précédentes, dans lequel ladite encre pouvant être fixée à chaud est fixée à une température d'activation requise d'environ 210°C (400°F).
